# FASCICULE DE BREVET EUROPEEN

(11) **EP 4 088 370 B1**
(45) Date de publication et mention de la délivrance du brevet: **31.01.2024**
(21) Numéro de dépôt: 20812063.4
(22) Date de dépôt: 30.11.2020
(51) Int. Cl.: H02K 13/02, H02K 3/28, H02K 15/095, H02K 19/26, H02K 19/12

(54) **PROCÉDÉ DE BOBINAGE D'UN ROTOR DE MACHINE ÉLECTRIQUE**
VERFAHREN ZUM WICKELN EINES ELEKTROMASCHINENROTORS
METHOD FOR WINDING AN ELECTRIC MACHINE ROTOR

(30) Priorité: 10.01.2020 FR 2000244
(43) Date de publication de la demande: 16.11.2022
(73) Titulaire: Renault s.a.s, 92100 Boulogne Billancourt (FR); NISSAN MOTOR CO., LTD., Yokohama-shi, Kanagawa 221-0023 (JP)
(72) Inventeur: BIROLLEAU, Damien, 78180 Montigny-le-Bretonneux (FR); MOTTE, Emmanuel, 76150 Saint Jean du cardonnay (FR); VIVAS-MARQUEZ, Daniella, 78280 Guyancourt (FR)
(74) Mandataire: Renault Group
(86) Numéro de dépôt international: PCT/EP2020/083938
(87) Numéro de publication internationale: WO 2021/139925

(56) Documents cités:
- DE-A1-102016 224 916
- GB-A- 2 362 269
- JP-A- 2005 287 281
- US-A1- 2010 019 711

## Description

### Domaine Technique de l'invention

L'invention concerne un rotor bobiné de machine électrique. L'invention porte aussi sur une machine électrique comprenant un tel rotor bobiné. L'invention porte aussi sur un véhicule comprenant un tel rotor bobiné et/ou une telle machine électrique. L'invention porte enfin sur un procédé d'obtention d'un tel rotor bobiné.

### Etat de la technique antérieure

Une machine électrique, en particulier une machine de traction électrique de véhicule automobile, peut comprendre un rotor bobiné. Un tel rotor bobiné comprend généralement un arbre et un collecteur et plusieurs pôles bobinés par un fil. Le bobinage du fil, généralement de type cuivre émaillé, est réalisé sur un paquet ou empilage de tôles. Pour assurer le passage de courant électrique dans ce bobinage, les deux extrémités du fil de cuivre sont connectés au collecteur par deux crochets. Un tel collecteur permet le passage de l'énergie électrique entre une partie fixe et le rotor bobiné (partie tournante).

Le passage ou trajet du bobinage au niveau d'encoches et/ou vers des connexions proches d'un tel arbre et/ou d'un tel collecteur est critique.

En effet, un mauvais cheminement du fil de bobinage vers la connexion peut entraîner un mauvais positionnement du fil dans le crochet de connexion. Des contraintes résiduelles dans la connexion (tension dans le fil et dans la connexion au moment de la fixation du fil sur le crochet généralement par sertissage) et/ou des contraintes mécaniques en rotation (effort centrifuge) peuvent alors en résulter. Un mauvais sertissage du fil peut encore engendrer un glissement du fil hors du crochet. Une ouverture du crochet et/ou la rupture du fil et/ou la casse du crochet de connexion peuvent également se produire.

En outre, ce passage de fil de bobinage doit être compatible avec le procédé de réalisation du bobinage qui est complexe. Ce passage de bobinage doit permettre d'assurer le sertissage des deux extrémités du fil de bobinage au niveau des deux crochets afin d'assurer leurs connexions.

Le passage de bobinage doit offrir une tenue mécanique du fil de bobinage adaptée aux contraintes de fonctionnement, en particulier la force centrifuge et/ou les vibrations. Le document US2010/019711 A1 divulgue un rotor bobiné pour machine électrique.

### Présentation de l'invention

Le but de l'invention est de fournir un procédé d'obtention d'un rotor bobiné remédiant aux inconvénients ci-dessus. En particulier, l'invention permet d'assurer la robustesse mécanique de la connexion du fil de bobinage sur l'arbre et/ou le collecteur d'un rotor bobiné.

### Résumé de l'invention

Pour atteindre cet objectif, l'invention porte sur un rotor bobiné, notamment un rotor bobiné pour une machine électrique, le rotor bobiné comprenant un arbre d'axe principal, l'arbre comprenant éventuellement un collecteur, le rotor bobiné comprenant un fil de bobinage et n pôles bobinés et ordonnés avec un numéro d'ordre croissant obtenu par rotation autour de l'axe principal, notamment n pôles bobinés répartis radialement autour de l'axe principal, les n pôles étant bobinés avec le fil en série tour à tour selon leurs numéros d'ordre croissant, le dernier pôle n'étant toutefois pas bobiné en dernier.

Le pénultième pôle peut être bobiné après le dernier pôle.

L'antépénultième pôle peut être bobiné après le dernier pôle.

En amont du premier pôle, le fil peut être en appui contre l'arbre sur un premier angle non nul autour de l'axe principal.

En aval du dernier pôle bobiné, le fil peut être en appui contre l'arbre sur un deuxième angle non nul autour de l'axe principal.

Le rotor bobiné peut comprendre des ergots destinés à faciliter le bobinage du fil, notamment entre deux pôles adjacents et/ou entre chaque pôle et l'arbre et/ou le collecteur, notamment des ergots s'étendant parallèlement ou sensiblement parallèlement à l'axe principal.

L'invention porte encore sur une machine électrique, notamment un moteur électrique de traction de véhicule, notamment pour véhicule automobile, comprenant un rotor bobiné tel que défini précédemment.

L'invention porte encore sur un véhicule, notamment un véhicule automobile, comprenant un rotor bobiné tel que défini précédemment et/ou une machine électrique telle que définie précédemment.

L'invention porte encore sur un procédé d'obtention d'un rotor bobiné tel que défini précédemment, le procédé comprenant des étapes de bobinage avec le fil des n pôles en série tour à tour selon leurs numéros d'ordre croissant, le dernier pôle n'étant toutefois pas bobiné en dernier.

### Présentation des figures

Ces objets, caractéristiques et avantages de la présente invention seront exposés en détail dans la description suivante de modes de réalisation faits à titre non-limitatif en relation avec les figures jointes parmi lesquelles :
[Fig. 1] La figure 1 est une vue schématique d'un véhicule comprenant une machine électrique comprenant un rotor bobiné à quatre pôles selon un mode de réalisation.
[Fig. 2] La figure 2 est une vue schématique d'un rotor bobiné à six pôles selon un autre mode de réalisation.
[Fig. 3] La figure 3 est une vue schématique d'un rotor bobiné à huit pôles selon un autre mode de réalisation.

### Description détaillée

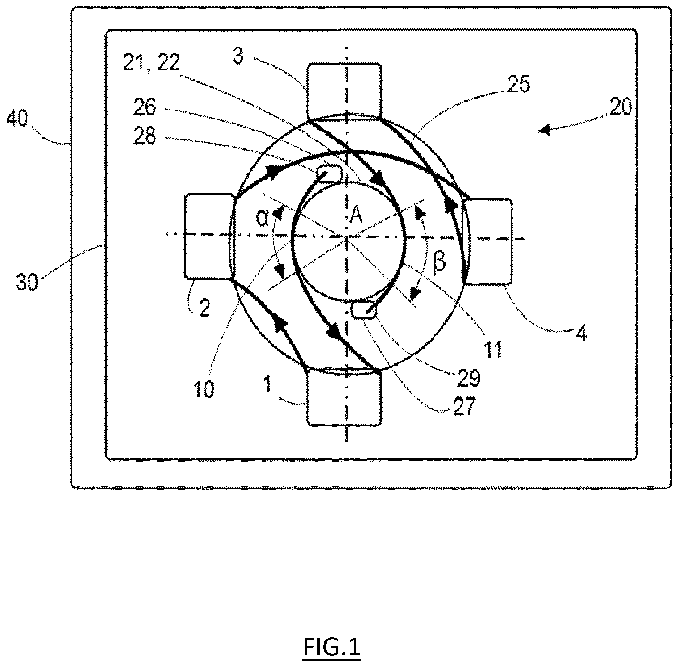

La figure 1 illustre schématiquement un véhicule selon un mode de réalisation, par exemple un véhicule automobile 40. Le véhicule comprend une machine électrique 30 selon un mode de réalisation, par exemple un moteur électrique de traction et/ou de propulsion du véhicule. La machine électrique 30 comprend un rotor bobiné 20 selon un mode de réalisation. Le rotor bobiné 20 comprend un arbre 21 d'axe principal A et un collecteur 22 aussi appelé « slipring » ou « slip ring » (terme anglo-saxon). Le collecteur 22 et l'arbre 21 sont assemblés de manière coaxiale, ou sensiblement coaxiale, selon l'axe de rotation principal A autour duquel le rotor bobiné 20 est destiné à tourner.

Comme illustré sur les figures 1, 2 et 3, le rotor bobiné 20 comprend un fil de bobinage 25. Le fil 25 est par exemple en cuivre, par exemple en cuivre émaillé.

Plus précisément, le rotor bobiné 20 comprend n pôles bobinés 1, 2, 3, ..., n-2, n-1, n. Les n pôles sont de préférence ordonnés avec un numéro d'ordre croissant obtenu par rotation autour de l'axe principal A. De préférence, comme illustré sur les figures, les n pôles bobinés 1, 2, 3, ..., n-2, n-1, n sont numérotés ou référencés ou identifiés en associant des numéros d'ordres croissants en tournant dans le sens des aiguilles d'une montre autour de l'axe A, chaque pôle étant associé à un unique numéro d'ordre. En outre, les n pôles sont répartis radialement ou sensiblement radialement autour de l'axe principal A. Les n pôles sont bobinés avec le fil 25 en série tour à tour selon leurs numéros d'ordre croissant, le dernier pôle n n'étant toutefois pas bobiné en dernier comme il sera expliqué par la suite.

Le premier pôle est donc associé au numéro d'ordre 1. Le deuxième pôle est associé au numéro d'ordre 2. L'antépénultième pôle est associé au numéro d'ordre n-2. Le pénultième pôle est associé au numéro d'ordre n-1. Le dernier pôle est associé au numéro d'ordre n.

L'ordre topologique des pôles défini ci-dessus est donc différent de l'ordre chronologique de bobinage des pôles comme il sera expliqué plus en détail par la suite.

A noter que préalablement au bobinage, une première extrémité 28 du fil 25 est d'abord fixée à un premier moyen de connexion 26 agencé sur l'arbre 21 et/ou sur le collecteur 22.

De préférence, comme illustré sur les figures, le premier moyen de connexion 26 est agencé à l'opposé du pôle 1 par rapport à l'axe principal A. Autrement dit le premier moyen de connexion 26 est disposé à proximité d'un pôle disposé en vis-à-vis, ou sensiblement en vis-à-vis, du pôle 1 par rapport à l'axe principal A.

Le premier moyen de connexion 26 est par exemple un crochet. De préférence, la fixation de la première extrémité 28 du fil 25 sur ou au niveau du premier moyen de connexion 26 est assurée par sertissage à chaud ou à froid.

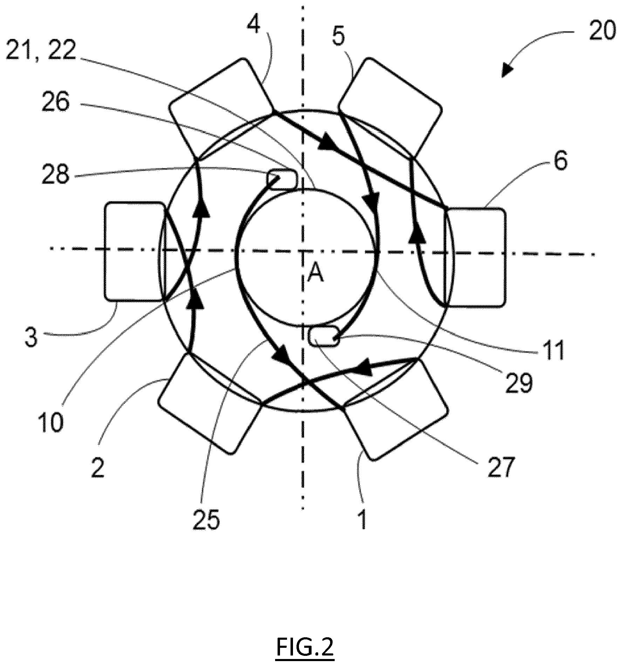

Par exemple, le pénultième pôle n-1 est bobiné après le dernier pôle n. Ainsi, par exemple, comme illustré sur la figure 1, pour un rotor bobiné à quatre pôles 1, 2, 3, 4, dans un premier temps le pôle 1 est bobiné, puis le pôle 2 est bobiné, puis le pôle 4 est bobiné et enfin le pôle 3 est bobiné en dernier. Ainsi, par exemple, comme illustré sur la figure 2, pour un rotor bobiné à six pôles 1, 2, 3, 4, 5, 6, dans un premier temps le pôle 1 est bobiné, puis le pôle 2 est bobiné, puis le pôle 3 est bobiné, puis le pôle 4 est bobiné, puis le pôle 6 est bobiné et enfin le pôle 5 est bobiné en dernier.

Alternativement, l'antépénultième pôle n-2 est par exemple bobiné après le dernier pôle n (non illustré).

Alternativement encore, l'antépénultième pôle n-2 et le pénultième pôle n-1 sont par exemple bobinés après le dernier pôle n (non illustré).

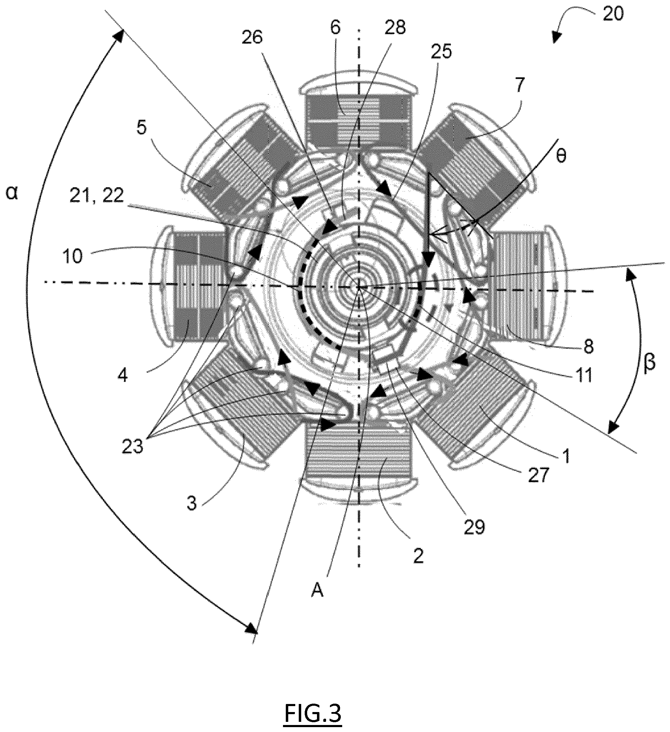

De préférence, comme illustré en particulier sur les figures 1 et 3, avant d'atteindre le premier pôle 1 pour être bobiné au niveau de ce pôle, c'est-à-dire en amont du premier pôle 1 dans le sens du bobinage, le fil 25 est mis en appui contre l'arbre 21 et/ou le collecteur 22. Autrement dit avant le premier pôle 1, le fil est en appui sur une portion 10 de la circonférence (représentée en pointillés sur la figure 3) de l'arbre 21 et/ou du collecteur 22. Cet appui se fait sur un premier angle α non nul autour de l'axe principal A, dont la valeur dépend du nombre de pôles du rotor. Par exemple, comme illustré sur la figure 3, il est supérieur à 45°. Le besoin est d'assurer le contact puis de le maximiser.

A noter qu'à la suite du bobinage des n pôles, une deuxième extrémité 29 du fil 25 est fixée à un deuxième moyen de connexion 27 agencé sur l'arbre 21 et/ou sur le collecteur 22.

De préférence, le deuxième moyen de connexion 27 est agencé à l'opposé du premier moyen de connexion 26 par rapport à l'axe principal A. Autrement dit le premier moyen de connexion 26 et le deuxième moyen de connexion 27 sont agencés symétriquement, ou sensiblement symétriquement, par rapport à l'axe principal A. Ainsi, de préférence, le deuxième moyen de connexion 27 est disposé à proximité du pôle 1.

Le deuxième moyen de connexion 27 est par exemple un crochet. De préférence, la fixation de la deuxième extrémité 29 du fil 25 sur ou au niveau du deuxième moyen de connexion 27 est assurée par sertissage à chaud ou à froid.

De préférence, après le dernier pôle bobiné, avant d'atteindre le deuxième moyen de connexion 27, c'est-à-dire en aval du dernier pôle bobiné dans le sens du bobinage, le fil 25 est mis en appui contre l'arbre 21 et/ou le collecteur 22. Autrement dit après le dernier pôle bobiné, le fil est disposé en appui sur une portion 11 de la circonférence (représentée en pointillés sur la figure 3) de l'arbre 21 et/ou du collecteur 22. Cet appui se fait sur un deuxième angle β autour de l'axe principal A non nul dont la valeur dépend du nombre de pôles au rotor.

Avantageusement, comme illustré sur la figure 3, le rotor 20 comprend des ergots 23 destinés notamment à faciliter le bobinage du fil 25. Par exemple, au moins un ergot 23 est agencé entre deux pôles adjacents et/ou au moins un ergot 23 est agencé entre chaque pôle et l'arbre 21 et/ou le collecteur 22. Par exemple, comme c'est le cas du mode réalisation illustré sur la figure 3, deux ergots 23 sont disposés à proximité de chaque pôle, entre chaque pôle et l'arbre 21 et/ou le collecteur 22. De préférence, les ergots 23 s'étendent parallèlement, ou sensiblement parallèlement, à l'axe principal A.

Un mode d'exécution d'un procédé d'obtention du rotor bobiné 20 illustré sur la figure 3 va maintenant être décrit.

Tout d'abord, on procède à la fourniture d'un rotor non bobiné doté de n pôles et d'un fil 25 de bobinage comprenant une première extrémité 28 et une deuxième extrémité 29. Le rotor non bobiné est équipé préalablement d'un arbre 21 et/ou d'un collecteur 22 d'axe de rotation principal A. Le rotor non bobiné est en outre déjà doté d'un premier moyen de connexion 26 et d'un deuxième moyen de connexion 27.

Dans un premier temps, on procède à la fixation de la première extrémité 28 du fil 25 sur le premier moyen de connexion 26, par exemple par sertissage. On positionne ensuite le fil 25 en appui contre l'arbre 21 et/ou le collecteur 22 sur une portion angulaire 10 en amenant le fil 25 à proximité du pôle 1. Autrement dit on amène le fil de l'autre côté du premier moyen de connexion 26 par rapport à l'axe principal A. De préférence, en cas de rotor équipé d'ergots 23, on vient passer le fil 25 contre au moins un ergot, par exemple de sorte à permettre d'orienter le fil dans une direction adaptée au bobinage du pôle 1 que l'on souhaite donc enrouler de fil 25.

On procède ensuite à une étape de bobinage avec le fil 25 du pôle 1. On passe ensuite à une étape de bobinage du pôle 2, éventuellement après avoir passé le fil 25 contre un ou plusieurs ergots 23 de sorte à orienter le fil pour le bobinage du pôle 2 et/ou à s'éloigner du bobinage du pôle 1. On passe ensuite à une étape de bobinage du pôle 3, éventuellement après avoir passé le fil 25 contre un ou plusieurs ergots 23 de sorte à orienter le fil pour le bobinage du pôle 3 et/ou à s'éloigner du bobinage du pôle 2. On passe ensuite à une étape de bobinage du pôle 4, éventuellement après avoir passé le fil 25 contre un ou plusieurs ergots 23 de sorte à orienter le fil pour le bobinage du pôle 4 et/ou à s'éloigner du bobinage du pôle 3. On passe ensuite à une étape de bobinage du pôle 5, éventuellement après avoir passé le fil 25 contre un ou plusieurs ergots 23 de sorte à orienter le fil pour le bobinage du pôle 5 et/ou à s'éloigner du bobinage du pôle 4. On passe ensuite à une étape de bobinage du pôle 6, éventuellement après avoir passé le fil 25 contre un ou plusieurs ergots 23 de sorte à orienter le fil pour le bobinage du pôle 6 et/ou à s'éloigner du bobinage du pôle 5. On passe ensuite à une étape de bobinage du pôle 8, éventuellement après avoir passé le fil 25 contre un ou plusieurs ergots 23 de sorte à orienter le fil pour le bobinage du pôle 8 et/ou à s'éloigner du bobinage du pôle 6. On passe ensuite à une étape de bobinage du pôle 7, éventuellement après avoir passé le fil 25 contre un ou plusieurs ergots 23 de sorte à orienter le fil pour son appui contre l'arbre 21 et/ou le collecteur 22 et/ou de sorte à s'éloigner du bobinage du pôle 7.

De préférence, le fil « sortant » d'une bobine est décalé, selon une direction parallèle ou sensiblement parallèle à l'axe principal A, par rapport au fil « entrant » et commençant le bobinage de la bobine suivante. Par exemple, des murets tenant les côtés de la bobine sont réalisés de manière à assurer une distance entre le fil « sortant » et le fil « entrant ». Ainsi, de préférence, les portions de fil n'entrent pas en contact les unes avec les autres du fait de leur position de départ et d'arrivée dans la bobine. Par exemple, le fil qui va à la connexion, ou crochet, passe au-dessus des autres portions du fil.

On positionne ensuite le fil 25 en appui contre l'arbre 21 et/ou le collecteur 22, sur une portion angulaire 11 de sorte à amener le fil 25 à proximité du pôle 1 autrement dit du côté du deuxième moyen de connexion 27. On procède à la fixation de la deuxième extrémité 29 du fil 25 sur le deuxième moyen de connexion 27, par exemple par sertissage.

Ainsi, le bobinage des n pôles est réalisé en série, tour à tour, selon leurs numéros d'ordre croissant, le dernier pôle n, le pôle 8 dans le cas de la figure 3, n'étant toutefois pas bobiné en dernier mais en avant dernier. Le dernier pole bobiné étant le pénultième n-1.

Par exemple, le bobinage des n pôles est réalisé en série, tour à tour, selon leurs numéros d'ordre croissant, l'antépénultième pôle n-2 étant bobiné après le dernier pôle n (non illustré). Par exemple, le bobinage des n pôles est réalisé en série, tour à tour, selon leurs numéros d'ordre croissant, le pôle n-3 étant bobiné après le dernier pôle n (non illustré).

Grâce à l'invention, on peut obtenir un rotor à six pôles, bobinés dans l'ordre suivant des pôles : 1, 2, 3, 4, 6, 5 ou 1, 2, 3, 5, 6, 4 ou 1, 2, 3, 6, 5, 4.

Grâce à l'invention, on peut obtenir un rotor à huit pôles, bobinés dans l'ordre suivant des pôles : 1, 2, 3, 4, 5, 6, 8, 7 ou 1, 2, 3, 4, 5, 8, 6, 7 ou 1, 2, 3, 4, 5, 8, 7, 6.

De manière générale, on peut obtenir un rotor à n pôles bobinés dans l'ordre suivant : 1, 2, ..., n-2, n, n-1 ou 1, 2, ..., n-3, n, n-1, n-2 ou 1, 2, ..., n-3, n-1, n, n-2.

En résumé la solution permet de modifier le schéma de bobinage afin de permettre de tangenter ou d'augmenter la zone de contact avec l'arbre et/ou le collecteur aussi bien au départ du fil 25 depuis la première connexion 26 qu'à l'arrivée du fil 25 vers la deuxième connexion 27. Par exemple, la modification d'ordre de bobinage des pôles offre un retour angulaire (c'est-à-dire dans le sens inverse des aiguilles d'une montre, les pôles étant numérotés dans le sens des aiguilles d'une montre) autour de l'axe principal A de l'ordre de 45 degrés pour l'arrivée du fil 25 à la deuxième connexion 27. De préférence, comme évoqué précédemment, ce n'est pas une simple tangence qui est obtenue avec l'arbre et/ou le collecteur mais une portion angulaire 10 de contact au départ du fil depuis la première connexion 26 et une portion angulaire 11 de contact à l'arrivée du fil vers la deuxième connexion 27.

De préférence, les contacts du fil 25 sur les portions angulaires 10, 11 se font directement sur le collecteur, en particulier sur une partie isolée, par exemple plastifiée et/ou en plastique, du collecteur. Alternativement ou en complément, une gaine isolante peut être prévue sur le fil, notamment sur la longueur de fil concernée, pour assurer cette isolation.

En outre, une telle configuration en vis-à-vis des moyens de connexions 26, 27 par rapport l'axe A favorisent la longueur de l'appui du fil 25 sur l'arbre ou le collecteur avant le bobinage et après le bobinage.

La solution offre donc une reprise d'effort conséquente sur chaque portion d'appui angulaire 10, 11 ce qui assure la robustesse mécanique de chaque connexion du fil sur le collecteur et/ou l'arbre.

La solution permet d'éviter d'avoir recours au surmoulage qui est long, coûteux et risqué. En effet, en fonctionnement, en cas de fissuration de la matière de surmoulage, le fil peut être sectionné.

La solution peut s'appliquer à des machines électriques de polarités différentes, par exemple dont les rotors comprennent six pôles, ou encore comprennent au-delà de huit pôles. Comme illustré sur la figure 1, elle est également compatible pour une machine électrique comprenant un rotor à quatre pôles afin d'augmenter la zone de contact avec le collecteur si besoin.

Grâce à la solution, le cheminement du fil de bobinage par rapport aux connexions, aussi bien la première connexion que la deuxième connexion, écarte tout mauvais positionnement du fil. Les contraintes résiduelles dans les connexions (tension dans le fil et dans la connexion au moment de la fixation du fil au crochet par sertissage par exemple) et/ou des contraintes mécaniques en rotation (effort centrifuge) sont atténuées voire éliminées. Tout glissement du fil hors du crochet lors du sertissage est évité, le positionnement du fil au sein de chaque crochet étant optimal pour procéder au sertissage. Ainsi, toute ouverture du crochet et/ou rupture du fil et/ou casse du crochet de connexion sont évités. En effet, l'angle du fil arrivant au sein de la deuxième connexion 27 permet d'assurer que le fil demeure au fond du crochet pendant le sertissage ce qui est primordial en termes de qualité concernant le sertissage.

Le procédé de bobinage associé à la portion 11 offre une répétabilité améliorée de position du fil en sortie de bobinage du dernier pôle bobiné, notamment grâce à un angle θ (illustré sur la figure 3) de sortie faible par rapport au bobinage réalisé sur le dernier pôle bobiné.

Le cheminement de la solution de bobinage offre une tenue mécanique du fil de bobinage supportant les contraintes de fonctionnement, en particulier la force centrifuge liée à la rotation du rotor et/ou les vibrations. En effet, la tension mécanique du fil au niveau des connexions est diminuée, notamment au cours du fonctionnement c'est-à-dire de la rotation du rotor. Ceci est obtenu en particulier du fait du contact du fil avec le collecteur avant que le fil ne rejoigne le moyen de connexion 27 pour la deuxième extrémité 29 du fil. En outre, grâce aux portions d'appui 10, 11, le comportement aux vibrations du fil entre les connexions 26, 27 et les ergots 23 et/ou le bobinage le plus proche est amélioré. Un abaissement des transmissions des vibrations du fil 25 au niveau des connexions 26, 27 en résulte ce qui supprime le risque de casse du fil aux points de connexion.

En remarque, la solution selon l'invention atteint donc l'objectif recherché d'assurer la robustesse mécanique des connexions du fil de bobinage sur l'arbre et/ou le collecteur d'un rotor bobiné et présente les avantages suivants :
- le coût est particulièrement faible, le rotor bobiné n'étant pas ou peu modifié pour la mise en oeuvre du procédé de bobinage ;
- les pièces environnantes ne sont pas impactées.

## Revendications

1. Rotor bobiné (20), notamment rotor bobiné (20) pour une machine électrique (30), le rotor bobiné (20) comprenant un arbre (21) d'axe principal (A), l'arbre (21) comprenant un collecteur (22), le rotor bobiné (20) comprenant un fil (25) de bobinage et n pôles bobinés (1, 2, 3, ..., n-2, n-1, n) et ordonnés avec un numéro d'ordre croissant obtenu par rotation autour de l'axe principal (A), notamment n pôles bobinés (1, 2, 3, ..., n-2, n-1, n) répartis radialement autour de l'axe principal (A),
**caractérisé en ce que** les n pôles sont bobinés avec le fil (25) en série tour à tour selon leurs numéros d'ordre croissant, le dernier pôle (n) n'étant toutefois pas bobiné en dernier.

2. Rotor bobiné (20) selon la revendication précédente, **caractérisé en ce que** le pénultième pôle (n-1) est bobiné après le dernier pôle (n).

3. Rotor bobiné (20) selon la revendication 1 ou 2, **caractérisé en ce que** l'antépénultième pôle (n-2) est bobiné après le dernier pôle (n).

4. Rotor bobiné (20) selon l'une des revendications précédentes, **caractérisé en ce qu'**en amont du premier pôle (1), le fil (25) est en appui contre l'arbre (21) sur un premier angle (α) non nul autour de l'axe principal (A).

5. Rotor bobiné (20) selon l'une des revendications précédentes, **caractérisé en ce qu'**en aval du dernier pôle bobiné (n-1 ; n-2), le fil (25) est en appui contre l'arbre (21) sur un deuxième angle (β) non nul autour de l'axe principal (A).

6. Rotor bobiné (20) selon l'une des revendications précédentes, **caractérisé en ce qu'**il comprend des ergots (23) destinés à faciliter le bobinage du fil (25), notamment entre deux pôles adjacents et/ou entre chaque pôle et l'arbre 21 et/ou le collecteur 22, notamment des ergots (23) s'étendant parallèlement ou sensiblement parallèlement à l'axe principal (A).

7. Machine électrique (30), notamment moteur électrique de traction de véhicule, notamment pour véhicule automobile (40), **caractérisée en ce qu'**elle comprend un rotor bobiné (20) selon l'une des revendications précédentes.

8. Véhicule, notamment véhicule automobile (40), **caractérisé en ce qu'**il comprend un rotor bobiné (20) selon l'une des revendications 1 à 6 et/ou une machine électrique (30) selon la revendication précédente.

9. Procédé d'obtention d'un rotor bobiné (20) selon l'une des revendications 1 à 6, **caractérisé en ce que** le procédé comprend des étapes de bobinage avec le fil (25) des n pôles en série tour à tour selon leurs numéros d'ordre croissant, le dernier pôle (n) n'étant toutefois pas bobiné en dernier.

## Patentansprüche

1. Gewickelter Rotor (20), insbesondere gewickelter Rotor (20) für eine elektrische Maschine (30), wobei der gewickelte Rotor (20) eine Welle (21) mit einer Hauptachse (A) enthält, wobei die Welle (21) einen Kollektor (22) enthält, wobei der gewickelter Rotor (20) einen Wickeldraht (25) und n bewickelte und mit einer Nummer aufsteigender Reihenfolge geordnete Pole (1, 2, 3, ... , n-2, n-1, n) enthält, die durch Drehung um die Hauptachse (A) erhalten wird, insbesondere n bewickelte Pole (1, 2, 3, ... , n-2, n-1, n), die radial um die Hauptachse (A) verteilt sind,
**dadurch gekennzeichnet, dass** die n Pole mit dem Draht (25) in Reihe nacheinander gemäß ihren Nummern aufsteigender Reihenfolge bewickelt sind, wobei der letzte Pol (n) aber nicht als letzter bewickelt wird.

2. Gewickelter Rotor (20) nach dem vorhergehenden Anspruch, **dadurch gekennzeichnet, dass** der vorletzte Pol (n-1) nach dem letzten Pol (n) bewickelt wird.

3. Gewickelter Rotor (20) nach Anspruch 1 oder 2, **dadurch gekennzeichnet, dass** der drittletzte Pol (n-2) nach dem letzten Pol (n) bewickelt wird.

4. Gewickelter Rotor (20) nach einem der vorhergehenden Ansprüche, **dadurch gekennzeichnet, dass** der Draht (25) stromaufwärts vor dem ersten Pol (1) über einen ersten Winkel (α) ungleich Null um die Hauptachse (A) gegen die Welle (21) anliegt.

5. Gewickelter Rotor (20) nach einem der vorhergehenden Ansprüche, **dadurch gekennzeichnet, dass** der Draht (25) stromabwärts hinter dem letzten bewickelten Pol (n-1; n-2) über einen zweiten Winkel (β) ungleich Null um die Hauptachse (A) gegen die Welle (21) anliegt.

6. Gewickelter Rotor (20) nach einem der vorhergehenden Ansprüche, **dadurch gekennzeichnet, dass** er Zapfen (23) enthält, die dazu bestimmt sind, das Wickeln des Drahts (25) zu vereinfachen, insbesondere zwischen zwei benachbarten Polen und/oder zwischen jedem Pol und der Welle 21 und/oder dem Kollektor 22, insbesondere Zapfen (23), die sich parallel oder im Wesentlichen parallel zur Hauptachse (A) erstrecken.

7. Elektrische Maschine (30), insbesondere elektrischer Antriebsmotor eines Fahrzeugs, insbesondere für ein Kraftfahrzeug (40), **dadurch gekennzeichnet, dass** sie einen gewickelten Rotor (20) nach einem der vorhergehenden Ansprüche enthält.

8. Fahrzeug, insbesondere Kraftfahrzeug (40), **dadurch gekennzeichnet, dass** es einen gewickelten Rotor (20) nach einem der Ansprüche 1 bis 6 und/oder eine elektrische Maschine (30) nach dem vorhergehenden Anspruch enthält.

9. Verfahren zum Erhalt eines gewickelten Rotors (20) nach einem der Ansprüche 1 bis 6, **dadurch gekennzeichnet, dass** das Verfahren Schritte des Bewickelns der n Pole mit dem Draht (25) in Reihe nacheinander gemäß ihren Nummern aufsteigender Reihenfolge enthält, wobei der letzte Pol (n) aber nicht als letzter bewickelt wird.

## Claims

1. Wound rotor (20), notably a wound rotor (20) for an electric machine (30), the wound rotor (20) comprising a shaft (21) with main axis (A), the shaft (21) comprising a slipring (22), the wound rotor (20) comprising a winding wire (25) and n wound poles (1, 2, 3, ..., n-2, n-1, n) ordered in ascending numerical order obtained by rotation about the main axis (A), notably n wound poles (1, 2, 3, ..., n-2, n-1, n) distributed radially about the main axis (A),
**characterized in that** the n poles are wound with the wire (25) in series turn by turn according to their ascending numerical order, although the last pole (n) is not the last to be wound.

2. Wound rotor (20) according to the preceding claim, **characterized in that** the penultimate pole (n-1) is wound after the last pole (n).

3. Wound rotor (20) according to Claim 1 or 2, **characterized in that** the antepenultimate pole (n-2) is wound after the last pole (n).

4. Wound rotor (20) according to one of the preceding claims, **characterized in that** upstream of the first pole (1), the wire (25) rests against the shaft (21) at a first non-zero angle (α) about the main axis (A).

5. Wound rotor (20) according to one of the preceding claims, **characterized in that** downstream of the last pole (n-1; n-2) to be wound, the wire (25) rests against the shaft (21) at a second non-zero angle (β) about the main axis (A).

6. Wound rotor (20) according to one of the preceding claims, **characterized in that** it comprises pins (23) intended to facilitate the winding of the wire (25), notably between two adjacent poles and/or between each pole and the shaft (21) and/or the slipring (22), notably pins (23) running parallel or substantially parallel to the main axis (A).

7. Electric machine (30), notably a vehicle traction electric machine, notably for a motor vehicle (40), **characterized in that** it comprises a wound rotor (20) according to one of the preceding claims.

8. Vehicle, notably a motor vehicle (40), **characterized in that** it comprises a wound rotor (20) according to one of Claims 1 to 6 and/or an electric machine (30) according to the preceding claim.

9. Method for obtaining a wound rotor (20) according to one of Claims 1 to 6, **characterized in that** the method comprises steps of winding the n poles with the wire (25) in series turn by turn in their ascending numerical order, although the last pole (n) is not the last to be wound.
